# EUROPEAN PATENT SPECIFICATION

(11) **EP 4 395 920 B1**
(45) Date of publication and mention of the grant of the patent: **04.11.2026**
(21) Application number: 22724303.7
(22) Date of filing: 27.04.2022
(51) Int. Cl.: B01D 63/10

(54) **SPIRAL WOUND MEMBRANE ELEMENT**
SPIRALFÖRMIG GEWICKELTES MEMBRANELEMENT
ÉLÉMENT DE MEMBRANE ENROULÉ EN SPIRALE

(30) Priority: 03.09.2021 WO PCT/CN2021/116407
(43) Date of publication of application: 10.07.2024
(73) Proprietor: FilmTec Water USA, LLC, Wilmington, Delaware 19803 (US); Dupont Technology (Shanghai) Co., Ltd., Shanghai, 200131 (CN)
(72) Inventor: LIAO, Zhuodan, Shanghai 201203 (CN); JONS, Steven, Edina, Minnesota 55439 (US)
(74) Representative: Abitz & Partner
(86) International application number: PCT/US2022/026541
(87) International publication number: WO 2023/033876

(56) References cited:
- US-A- 5 858 229
- US-A1- 2011 091 094
- US-B1- 8 496 825
- US-B2- 7 951 295

## Description

### Field of the Invention

This invention relates to spiral wound membrane elements and methods for making them.

### Background

Reverse osmosis (RO), nanofiltration, and ultrafiltration membranes are commonly configured as spiral wound membrane elements or modules. The spiral wound configuration allows a large amount of membrane area to be packed into a small volume.

A common spiral wound filtration element includes a central permeate collection tube, around which one or more membrane envelopes and feed spacers are wound to form a spiral bundle. The membrane envelopes include two sections of membrane sheet that sandwich a permeate channel spacer. The membrane sheets forming a membrane envelope are sealed along three edges and open at a proximal edge where the membrane envelope meets the central permeate collection tube. The spiral bundle has scroll faces at opposing ends. The spiral bundle may be partially or entirely enclosed within an outer container or wrap, commonly comprising fiberglass or tape wrap Document US5858229 discloses a spiral wound element according to the preamble of claim 1.

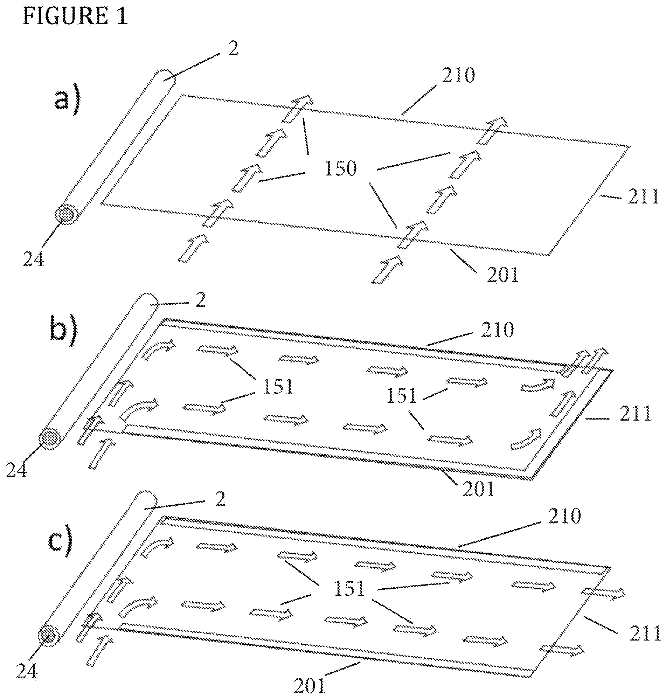

Figure 1 illustrates the difference in feed flow paths between conventional axial flow elements (Fig 1a) and elements designed for radial flow (Figures 1b and 1c). In an element designed for axial flow as shown in Figure 1a, feed is introduced into an inlet side 201 of the spiral bundle (shown unwound for purposes of illustration) and flows through the feed spacers and between the windings of the membrane envelope(s) in a direction generally parallel to central permeate collection tube 2, as indicated by arrows 150, becoming concentrated and being removed as concentrate from an outlet side 210 of the scroll face. Permeate, *i.e.,* that portion of the feed that permeates through the membrane and into the membrane envelope, travels between the membrane sheets in a spirally inward direction toward permeate collection tube 2. Permeate then enters permeate collection tube 2 and is removed through permeate outlet 24.

There are benefits to establishing a radial flow of feed through the membrane. For instance, flows within the element may be designed to reduce fouling or scaling. In a traditional RO element with axial feed flow, pressure drop within the permeate spacer causes flux (and polarization near the membrane surface) to be highest in the region adjacent the permeate tube. At the same time, permeation of water through the membrane causes the feed concentration to be highest at the tail end of the element, where feed solution exits the elements. Scaling is typically first evident in the corner where these two regions are partially co-located. By contrast, flow through a radial flow element can be arranged to have the highest concentration of feed solution located at the periphery of the element, so that it does not overlap with the region of highest flux and polarization. Also, when evaluated at similar flux and recovery, a radial flow element may be designed to have a greater feed flow velocity than traditional elements of the same size and feed spacer thickness, and the resultant increased mixing can decrease both scaling and fouling.

Typical radial flow patterns are illustrated in Figures 1b and 1c. As shown in Figures 1b and 1c the feed travels spirally outwardly between the windings of the membrane envelope, in a radial direction that is predominantly perpendicular to the permeate tube. In the Figures 1b and 1c, arrows 151 correspond to a feed flow direction being radially outward, so that concentrate is removed from outlet side 210 or from distal end 211. Alternatively the direction of flow of the feed may also travel in the opposite direction, *i.e.,* spirally inwardly, in which case arrows in Fig. 1b and 1c would be in opposite direction. Radial flow can be facilitated at least in part by allowing feed to enter through only a section of a scroll face, such as by use of a sealant to selectively seal only a section of the scroll face and block other parts. For example, the sealant might be applied to a radially outward section of the scroll face, but not to a radially inward section nearer the tube. In that case, feed can only enter the spiral bundle though the unsealed radially inward section. Conversely, the radially inward section can be sealed, but not the radially outward section, thereby allowing feed to enter only through the radially outward section of the scroll face. The problem with this sealing method is that it is difficult to precisely control the application of sealant only to the intended sections of the scroll face.

### Summary of the Invention

This invention is a spiral wound filtration element comprising:
a) a central permeate collection tube having multiple openings along its length and a permeate outlet at one or both ends;
b) a spiral bundle comprising at least one membrane envelope and at least one feed spacer means for producing feed channels in the spiral wound filtration element, the at least one membrane envelope and at least one feed spacer means being wound about the central permeate collection tube,
wherein:
(i) each membrane envelope comprises two sections of membrane sheet and permeate channel spacer means for providing a permeate channel between the two sections of membrane sheet, each membrane envelope being sealed on each of a first edge, a second edge opposite the face edge and a distal edge, and being open on a proximal edge, each membrane envelope being affixed to the central permeate collection tube such that the open proximal edge of each membrane envelope is in fluid communication with one or more of the multiple openings along the length of the permeate collection tube,
(ii) said spiral bundle has opposing first and second scroll faces at opposite ends of the spiral bundle, an exterior longitudinal surface between the first and second scroll faces, and feed channels between adjacent external surfaces of the at least one membrane envelope in the spiral bundle, and
(iii) the first scroll face includes at least two concentric, axially displaced regions, at least one of said concentric, axially displaced regions of the first scroll face being sealed with respect to the feed channels, and at least one of said concentric, axially displaced regions of the first scroll face being unsealed so as to permit a feed fluid to flow through such unsealed region of the first scroll face and into the feed channels of the spiral bundle or a concentrate to flow out of the feed channels of the spiral bundle through such unsealed region;
the spiral wound filtration element further comprising an opening on the second scroll face, on the exterior longitudinal surface of the spiral bundle, or both, to permit a concentrate to flow out the feed channels of the spiral bundle or a feed fluid to flow into the feed channels of the spiral bundle.

The invention is also a method for producing a spiral wound filtration element comprising:
a) winding at least one membrane envelope and feed spacer means for producing feed channels around a permeate collection tube to form a spiral bundle having opposing first and second ends, an exterior longitudinal surface between the first and second ends, feed channels located between adjacent external surfaces of the at least one membrane envelope, and one or more openings in the second end, the exterior longitudinal surface, or both, to permit a concentrate to flow out of the feed channels of the spiral bundle or a feed fluid to flow into the feed channels of the spiral bundle, wherein
   (i) the permeate collection tube has multiple openings along its length and a permeate outlet on at least one end, and
   (ii) each membrane envelope comprises two sections of membrane sheet and permeate channel spacer means for providing a permeate channel between the two sections of membrane sheet, each membrane envelope being open on a proximal edge and sealed at or near each of a first edge, a second edge opposite the first edge, and a distal edge, wherein the first edge is sealed with an adhesive strip, and wherein each membrane envelope is affixed to the central permeate collection tube such that the open proximal edge of each membrane envelope is in fluid communication with one or more of the multiple openings along the length of the permeate collection tube;
b) in one or more removal steps, removing at least a part of first end of the spiral bundle, whereby portions of each of membrane sheet, feed spacer means, permeate spacer means and adhesive strip are removed to form a first scroll face while leaving a portion of the adhesive strip intact along the entire first edge of each membrane envelope; wherein said first scroll face includes at least two concentric axially displaced scroll face regions; and
c) sealing at least one of but fewer than all of the concentric axially displaced scroll face regions of the first scroll face to produce one or more sealed scroll face regions, each sealed scroll face region having a seal that blocks flow into and out of the feed channels through said sealed scroll face region.

### Brief Description of the Drawings

Figure 1a is a perspective view illustrating axial feed flow through a spiral wound membrane.
Figure 1b is a perspective view illustrating a mode of radial feed flow through a spiral wound membrane.
Figure 1c is a perspective view illustrating a mode of radial feed flow through a spiral wound membrane.
Figure 2 is a perspective view, partially in section, of a partially unwound spiral wound filtration element of the invention.
Figure 3 is an isometric view of an embodiment of a spiral wound filtration element of the invention.
Figure 4 is an isometric view of a second embodiment of a spiral wound filtration element of the invention.
Figure 5 is an isometric view of a second embodiment of a spiral wound filtration element of the invention.
Figure 6a is a cross-sectional view, partially in section, of an embodiment of the invention.
Figure 6b is a cross-sectional view, partially in section, of an embodiment of the invention.
Figure 7 is a perspective view of a membrane material adapted for use in producing a spiral wound filtration element of the invention.
Figure 8 schematically illustrates a first method of producing an adhesive seal on a spiral wound filtration element of the invention.
Figure 9 schematically illustrates a second method of producing an adhesive seal on a spiral wound filtration element of the invention.

### Detailed Description of the Invention

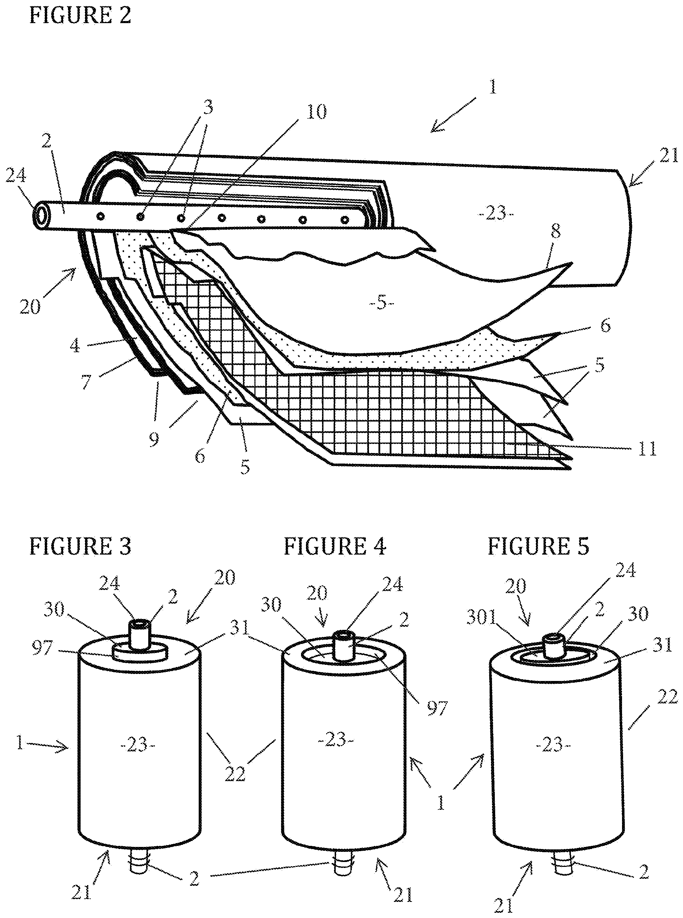

Turning to Figures 2-5, spiral wound filtration element 1 includes central permeate collection tube 2. Central permeate collection tube 2 has multiple openings 3 (Figure 2) along its length through which permeate enters from membrane envelope 4 (Figure 2), and at least one permeate outlet 24 at one or both ends for discharging permeate.

One or more membrane envelopes 4 and one or more feed spacer means 11 are wound about central permeation collect tube 2 to form spiral bundle 23. Spiral wound filtration elements having membrane envelopes and feed spacer means wound about a central permeate collection tube, as well as methods for making those elements, are well known and described, for example, in US Patent Nos. 4,792,401, 5,275,726, 8,142,657, 8,661,648 and WO 91/11249, among many other references, any of which are useful in this invention. As such, the assembly of the spiral wound filtration element will only be cursorily described.

An embodiment of membrane envelope 4 is illustrated in Figure 2. Membrane envelope 4 comprises two membrane sheets 5 (which may be substantially rectangular, including square) and permeate spacer means 6. Two membrane sheets 5 may be formed from a single larger sheet that is folded along the proximal edge 10, commonly including a feed spacer means 11 therebetween. In some embodiments, such as peddle-leaf designs, multiple membrane sheets are formed by also folding a single larger sheet along the distal edge 9.

The membrane sheets are or include sheets of membrane materials such as nanofiltration, reverse osmosis or ultrafiltration membrane materials; the membrane sheets may be asymmetric or symmetric membrane materials that have a discriminating layer and a support. Examples of discriminating membrane materials include cellulose acetate, polysulfone, polyether sulfone, polyamides, polyvinylidine fluoride and the like, but the discriminating layer is preferably a polyamide thin-film formed through interfacial polymerization. A support layer in an asymmetric membrane maybe include, for example, a non-woven fabric, fiber web, or woven fabric, such as are described in US Patent No. 4, 214,994, 4,795,559, 5,435,957, 6,156,680, 7,048,855 and 8.591,684. Most preferably, the membrane is a composite that includes a thin-film layer on a porous ultrafiltration support, itself supported by a non-woven web, such as described in US Patent No. 4, 277,344.

Permeate spacer means 6 creates a permeate channel between the two membrane sheets 5 of membrane envelope 4, such that permeate passing through membrane sheets 5 enters membrane envelope 4 and flows within the permeate channel to central permeate collection tube 2. The open proximal end of membrane envelope 4 is in fluid communication with one or more of multiple openings 3 along the length of central permeate collection tube 2 such that permeate within the permeate channel of membrane envelope 4 can flow into those openings. Permeate spacer means 6 may be a sheet of material, separate from each of the two membrane sheets 5, such as a mesh, knit or woven fabric that forms flow channels, and one common form is a tricot knit. In other embodiments, permeate channels between membrane sheets may be formed by structures extruded, embossed, or otherwise constructed to provide multiple continuous paths for flow between the membranes. Examples of permeate spacer materials include polyethylene, polyesters and/or polypropylene.

Alternatively or in addition, permeate spacer means 6 may be integrated into one or both of membrane sheets 5, for example in the form of raised areas that extend into the permeate channel. Such raised areas may be or include, for example, raised dimples, raised ridges and the like, which may form any pattern and/or may be randomly arranged, in each case so as to separate the two membrane sheets 5 to form the permeate channel.

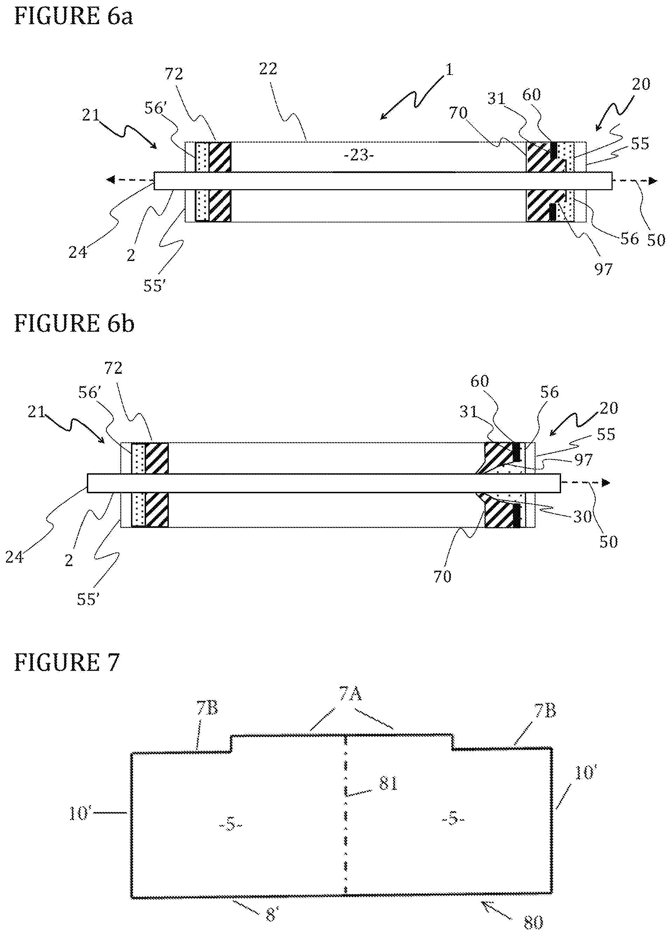

Membrane envelope 4 is sealed on first edge 7, second edge 8, and distal edge 9. First edge 7 preferably is sealed with an adhesive, forming adhesive strip 70 (Figures 6a and 6b) that runs parallel to first edge 7 and extends inwardly therefrom. Preferably, the width of adhesive strip 70 is great enough to allow membrane envelope 4 to be trimmed within adhesive strip 70 to produce concentric axially displaced regions (such as regions 30, 31 and 301 in Figures 3-5) of first scroll face 20 as described more fully below. Second edge 8 and distal edge 9 can be sealed in the same manner, using an adhesive to form adhesive strips (such adhesive strip 72 in Figure 6a and 6b) parallel to and extending inwardly from the corresponding edge. Alternatively, either second edge 8 and/or distal edge 9 can be a folded side of a larger membrane sheet that has been folded to form the two membrane sheets 5 of membrane envelope 4, the fold producing the seal in such a case.

As shown in Figure 2, feed spacer means 11 produces feed channels between adjacent external surfaces of the membrane envelopes 4 in spiral bundle 23. Each feed channel is a conduit through which feed flows between and in contact with membrane envelopes 4, becomes concentrated due to the permeation of a portion of the feed into membrane envelope 4, and is conducted (as concentrate) to a concentrate outlet. Feed spacer means 11 may be a separate sheet such as an extruded diagonal net as described, for example, in US Patent No. 6,881,336. Alternatively or in addition, feed spacer means 11 may be integrated into one or both of membrane sheets 5 in the form of raised areas that extend into the feed channel.

The proximal ends 10 of the one or more membrane envelopes 4 are affixed to central permeate collection tube 2, typically by gluing although mechanical fastening methods can be used. Feed spacer means 11, when separate from membrane envelopes 4, are interleaved with membrane envelopes 4 and the membrane envelopes 4 and feed spacer means 11 are wound about central permeate collection tube 2 to form spiral bundle 23.

Spiral bundle 23 has exterior longitudinal surface 22, first scroll face 20 and second scroll face 21 on the opposite end of the spiral bundle opposing the first scroll face 20. First scroll face 20 corresponds to first edge 7 of membrane envelope 4, and second scroll face 21 corresponds to second edge 8 of membrane envelope 4, after winding. The labels "first" and "second" are used arbitrarily herein to distinguish the scroll faces and certain edges of the membrane envelope; no temporal relationship or precedence amongst these are intended by these designations.

First scroll face 20 includes concentric, axially displaced regions (such as regions 30, 31 and 301 in Figures 2-5). By "axially displaced", it is meant that at least two adjacent concentric regions are axially offset, *i.e.,* located at different positions or different heights along an axis parallel to the permeate tube. There is at least one inner region 30 and at least one outer region 31. "Inner" refers to radially inward, and "outer" refers to radially outward. An inner region such as inner region 30 may extend axially outward relative to an outer region such as outer region 31, as shown in Figures 3 and 6. Conversely, an outer region such as outer region 31 of Figures 2-5) may extend axially outward relative to an adjacent inner region such as inner region 30, as shown in Figure 4. The average axial offset between adjacent concentric, axially displaced regions may be, for example at least 1 mm and up to 2 cm. More preferably, the average axial offset may be greater than 2 mm or even 2.5 mm or even 5 mm. The average axial offset may be, for example, up to 2.5 cm or up to 1 cm. Each concentric, axially displaced region may constitute, for example, more than 5% of the total scroll face area of inlet scroll face 20.

The axial displacement between adjacent concentric, axially displaced regions of first scroll face 20 produces a wall (reference numeral 97 in Figures 3-6) at the boundary between those adjacent, axially displaced regions. Wall 97 is an exposed side of the region that extends more axially outward, and delineates a surface region of the first scroll face which is extends axially outward from the adjacent region. Wall 97 may have a height equal to the axial offset. Ridge or wall 97 preferably is perpendicular to the adjacent concentric axially displaced regions (such as regions 30, 31) of first scroll face 20, but may be at another angle thereto. Preferably, the wall is no more than 45 degrees, more preferably 15 degrees, from the perpendicular.

It is preferred to provide exactly two concentric, axially displaced regions in first scroll face 20, although a greater number may be provided if desired. Figure 5 illustrates an exemplary embodiment having three such concentric, axially displaced regions 30, 31 and 301.

Axially displaced regions of first scroll face 20 can be produced in several ways. In a preferred process, concentric, axially displaced regions (such as regions 30, 31 and 301 in Figures 2-5) are produced via a cutting or trimming operation, in which spiral bundle 23 is formed having a first end, and first scroll face 20 is produced by cutting or trimming the first end to produce the concentric axially displaced regions.

Referring to Figure 6a, line 55 and 55' represents the longitudinal extent of spiral bundle 23 (and of the unmodified starting scroll face) after winding and before such a cutting or trimming operation. Lines 56 and 56' represents the longitudinal extent of adhesive strips 70 and 72, respectively, after winding and before such a cutting or trimming operation. (Both shaded regions (hash-marked and dotted) initially corresponded to the region of adhesive strip, but only the hash-marked regions remain after cutting operations.) **In the** embodiments shown in Figures 6a and 6b, the cutting or trimming operation is performed on both inner region 30 and outer region 31. The cutting or trimming operation may be done in a single step or in two or more steps. When performing the cutting or trimming operation the removed material typically comprises portions of each membrane sheet 5, feed spacer means 11, permeate spacer means 6, and typically a portion of adhesive strip 70, while leaving at least a portion of adhesive strip 70 intact. Scroll face 20 is formed, with inner and outer regions 30 and 31 and wall 97.

In one embodiment, inner region 30 and outer region 31 are formed by removing a first section of the first end of spiral bundle 23 from a radially inward location while leaving a portion of the adhesive strip intact in said first section and removing a second section from a radially outward portion of the first end of the spiral bundle. This can be performed in one or multiple steps. It is often preferred but not necessary to produce a uniformly flat surface on each of inner region 30 and outer region 31. Such a flat surface is preferably perpendicular to the axis of the central permeate collection tube 2. Such a method may be extended to produce three or more concentric, axially displaced regions.

In another embodiments, a first removal step is performed, and an adhesive seal is then applied to all or a portion of the first scroll face. In a second removal step, a portion of the adhesive seal (together with portions of each of membrane sheet, feed spacer means, permeate spacer means and adhesive strip) is removed adjacent to the permeate tube to form a radially inward and axially inward region of unsealed scroll face suitable to pass feed. In contrast to the illustration in Fig. 4., this inner region 30 may preferably have a generally slanted surface (as opposed to flat and perpendicular to the permeate tube axis), as an angled cut can enable the cut surface to be formed with less debris that could otherwise restrict flow. Also, when a radially inward concentric region 30 is axially inward and adjacent the permeate tube, it can be advantageous to have a greater width of the adhesive strip 70 near the permeate tube. In preferred embodiments, the average distance of open permeate channel between the opposing adhesive strips (70, 72) near first and second edges (7,8) is preferably at least one centimeter less within 5 cm of the permeate tube than it is across other regions of the permeate spacer. Fig. 6b illustrates how an angle-cut surface adjacent the permeate tube can be combined with an increased inward extension of the adhesive strip 70 from the first edge 7 to facilitate creating an open feed channel without breaching the adhesive strip 70.

Such a cutting or trimming step is performed without breaching the seal on first face edge 7 of membrane envelope 4. In preferred embodiments in which first face edge 7 of membrane envelope 4 is sealed with adhesive strip 70, cutting or trimming is performed within or exterior to adhesive strip 70 such that the seal produced by adhesive strip 70 remains intact, as shown in Figure 5.

Cutting or trimming can be performed, for example, using a knife, rotary blade, milling machine, or other useful method. In preferred embodiments, the cutting or trimming may be at least partially performed while rotating the element relative to a cutting tool such as a chamfer).

An alternative method of producing the concentric, axially displaced regions of inlet scroll face 20 is to fabricate the membrane envelope(s) 4 and/or membrane sheets 5 in such a manner as to produce the concentric, axially displaced regions when the membrane envelope(s) 4 are wound to form a spiral bundle. Turning to Figure 7, membrane 80 is adapted to fold along line 81 to form two membrane sheets 5, fold 81 forming sealed distal edge 9 of membrane envelope 4 when membrane 80 is assembled into a membrane envelope. Upon assembly into a membrane envelope, edge 8' and edges 10' produce outlet edge 8 and proximal edge 10 of the membrane envelope, respectively. Edges 7A and 7B are displaced from each other and, upon folding, produce first edge 7 of the membrane envelope. Upon winding to form a spiral bundle, edges 7A and 7B produce axially displaced, concentric inner and outer regions (30, 31) of scroll face 20.

Alternatively, two separate membrane sheets can be fabricated separately in a manner analogous to that shown in Figure 7 to produce displaced first edges 7A and 7B, and then formed (together with permeate spacer means) to produce the membrane envelope. Instead of fabricating the membrane or membrane sheets in such a manner, the membrane sheets can be first formed into a membrane envelope and the first edge of membrane envelope cut or trimmed to produce edges analogous to first edges 7A and 7B of Figure 7. Upon winding, axially displaced concentric inner and outer regions (30, 31) of scroll face 20 are produced.

At least one but not all of the concentric axially displaced regions of first scroll face 20 are sealed to locally close off flow paths into or out of the feed channels through that region or regions of first scroll face 20. It is generally preferable to seal an outer region such as outer region 31, leaving a more radially inward region or regions such as region 30 and/or 301 unsealed. A preferred type of sealant is an adhesive sealant that is applied as a liquid or emulsion and dried and/or cured to form adhesive seal 60 on the corresponding region of first scroll face 20.

Adhesive seal 60 is adapted to prevent feed from entering or leaving spiral bundle 23 through the sealed region(s) of first scroll face 20, thereby restricting fluid flow only to the unsealed region(s). The sealant may be an elastomeric type. Examples of useful adhesive sealants include various types of hot-melt adhesives, and polymerizable adhesives having at least one reactive monomer such as, for example, various one-part or two-part epoxies or urethanes, free-radical polymerizable adhesives, cyanoacrylate adhesives, and the like. In some embodiments, the seal may be adhered to a permeable or impermeable backing layer, so that the seal layer is sandwiched between the scroll face and backing layer.

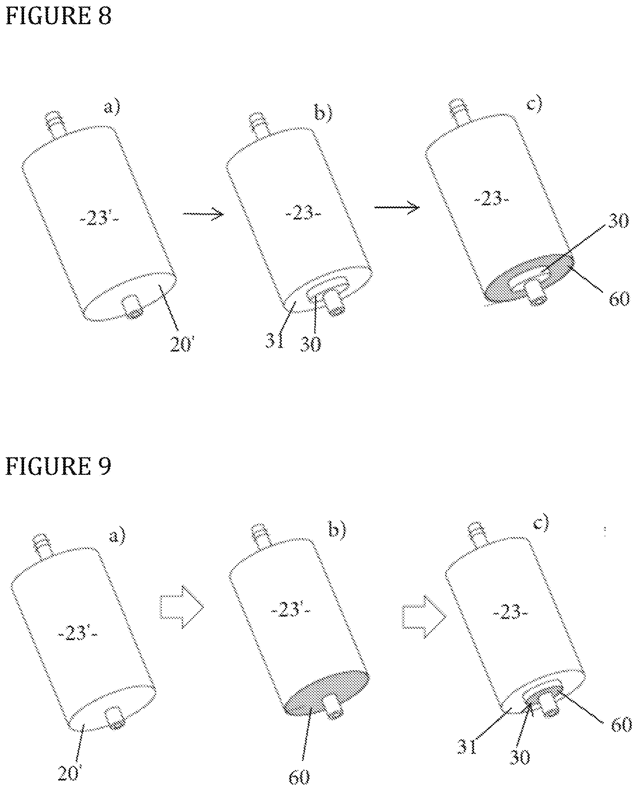

In embodiments in which the concentric, axially displaced regions of first scroll face 20 are produced by cutting or trimming, adhesive seal 60 may be applied after the cutting or trimming step(s), as shown schematically in Figure 8. As shown in Figure 8, an untrimmed spiral bundle 23' is formed about central permeate collection tube 2 in a step (a). First end 20' of untrimmed spiral bundle 23' is trimmed in one or more steps (b) to produce first end 20 of spiral bundle 23 having concentric, axially displaced regions 30 and 31. As shown, inner region 30 extends axially outwardly from region 31. In a step (c), adhesive seal 60 is then applied only to one of the concentric, axially displaced regions of first scroll face 20 (c). As shown, adhesive seal 60 is applied outer region 31, although it may be applied to any one or more of the concentric, axially displaced regions, provided at least one of such regions remains unsealed.

An advantage of this invention is that, due to the axial offset of adjacent, concentric regions of first scroll face 20, application of the adhesive seal to only the intended region is simplified and more easily controlled near the wall (such as wall 97) at the boundary between the adjacent, concentric axially displaced regions. The invention is particularly well suited for robotic or otherwise automated application of the adhesive seal.

In another preferred embodiment, an adhesive seal may be applied to the entire first end of spiral bundle 23, preferably after a first cutting or trimming operation that flattens the scroll face surface. In this embodiment, only a portion of the adhesive seal is removed during the cutting or trimming operation, leaving adhesive seal 60 on a remaining (less axially displaced) portion of first scroll face 20. In this embodiment, in which the cutting or trimming operation is preferably performed by making multiple cuts, adhesive seal 60 is performed after a first cut and before a second or final cut. Such a process is illustrated schematically in Figure 9. As shown in Figure 9, an untrimmed spiral bundle 23' is formed about central permeate collection tube 2 in a step (a). In a step (b), adhesive seal 60 is applied to the entirety of first end 20' of the spiral bundle. First end 20' of spiral bundle 23' then is trimmed in one more steps (b) to produce first end 20 of spiral bundle 23 having concentric, axially displaced regions 30 and 31, one of which (30) remains sealed with adhesive seal 60. The adhesive seal is removed from region 31 during the trimming step, leaving only region 30 sealed. As shown, inner region 30 extends axially outwardly from region 31 and retains the adhesive seal.

Alternatively, any concentric, axially displaced region of first scroll face 20 that is to be sealed can be sealed mechanically, such as through the use of an appropriate gasket or other mechanical apparatus, fitted to seal the appropriate region. Such a gasket may be held in position via an end cap or other mechanical means.

In some embodiments, second scroll face 21 also includes at least two concentric, axially displaced regions including a radially inward region and at least one radially outward region, as described with respect to first scroll face 20. In such a case, at least one of such regions may be sealed as described above, and at least one of such regions may be unsealed. In other embodiments, second scroll face 21 has a flat surface.

A feed fluid is filtered using the spiral wound membrane element of the invention. An unsealed region of first scroll face 20 functions as either a feed inlet port (as shown in Figures 1a, 1b and 1C) or a concentrate outlet port, depending on how the flows are directed through the element. Spiral wound filtration element 1 further includes an opening on second scroll face 21 (as shown in Figure 1b), on exterior longitudinal surface 22 of spiral bundle 23 (as shown in Figure 1C), or both. Openings on second scroll face 21 and exterior longitudinal surface 22 function as either concentrate outlets or feed fluid inlets, again depending on how flows are directed through the element. The direction of the flows is determined by the orientation of the spiral wound membrane element in a filtration system and by the location of the sealed region of inlet scroll face 20.

In some embodiments, feed fluid is brought under applied pressure into contact with the unsealed region(s) of first scroll face 20, where the feed fluid enters spiral bundle 23 via feed channels formed by feed spacer means 11. The feed then travels within and through spiral bundle 23, with part of the feed permeating into membrane envelope 4 to form a permeate and the remainder (the concentrate) flowing out of spiral bundle 23 through a concentrate outlet, which may be in second scroll face 21, in exterior longitudinal surface 22, or both. In such embodiments, the feed fluid most preferably enters the feed channels at an unsealed inner region (such as region 30 in Figures 2-4) of first scroll face 20, and flows in a radially outward, spiraling direction as indicated by arrows 151 in Figures 1b and 1c (it being understood that arrows 151 represent an idealized flow path that only approximates actual direction of flow). The concentrate outlet may be (a) all or a portion of second scroll face 21 (Figure 1b), (b) at exterior longitudinal surface 22 (Figure 1c) of spiral bundle 23, at the distal ends of the membrane envelopes 4 and feed spacer means 11, or (c) both. In embodiments in which the concentrate outlet is along exterior longitudinal surface 22 of spiral bundle 23, second scroll face 21 preferably is entirely sealed to prevent concentrate from exiting spiral bundle 23 through second scroll face 21. In embodiments in which the concentrate outlet is a portion of outlet scroll face 21, an inner or outer portion of outlet scroll face 21 may be sealed as described with respect to inlet scroll face 20. In embodiments in which a portion of outlet scroll face 21 is sealed, outlet scroll face may include concentric, axially displaced regions analogous to the concentric, axially displaced regions (30, 31, 301, *etc*.) of inlet scroll face 20.

In other embodiments, the unsealed region(s) of first scroll face 20 functions as a concentrate outlet. In such an embodiment, one or more openings on exterior longitudinal surface 22, at the distal ends of the membrane envelopes 4 and feed spacer means 11, preferably are provided, which openings function as feed fluid inlets. In such embodiments, an unsealed region of first scroll face 20 is provided, in which case feed fluid flows in a radially inward, spiraling direction opposite that indicated by arrows 151 in Figures 1b and 1c.

Spiral wound filtration element 1 may include various additional and optional features. End caps may be provided at either or both of the inlet and outlet ends of the element. The spiral bundle may be contained in a longitudinal casing. Such end caps and casing, when present may, for example, include one or more ports for introducing and removing fluids (feed, permeate and concentrate) to and from the element; be adapted to direct flows to and from specific areas of the spiral bundle; be adapted to prevent or reduce telescoping; be adapted to provide mechanical protection to the spiral bundle, and/or be adapted to interface with other components of a filtration system.

## Claims

1. A spiral wound filtration element (1) comprising:
a) a central permeate collection tube (2) having multiple openings (3) along its length and a permeate outlet (24) at one or both ends;
b) a spiral bundle (23) comprising at least one membrane envelope (4) and at least one feed spacer means (11) for producing feed channels in the spiral wound filtration element, the at least one membrane envelope (4) and at least one feed spacer means (11) being wound about the central permeate collection tube (2),
wherein:
(i) each membrane envelope (4) comprises two sections of membrane sheet (5) and permeate channel spacer means (6) for providing a permeate channel between the two sections of membrane sheet (5), each membrane envelope (4) being sealed on each of a first edge (7), a second edge (8) opposite the first edge (7), and a distal edge (9), and being open on a proximal edge (10), each membrane envelope (4) being affixed to the central permeate collection tube (2) such that the open proximal edge (10) of each membrane envelope (4) is in fluid communication with one or more of the multiple openings (3) along the length of the permeate collection tube (2),
(ii) said spiral bundle (23) has opposing first (20) and second (21) scroll faces at opposite ends of the spiral bundle (23), an exterior longitudinal surface (22) between the first (20) and second scroll (21) faces, and feed channels between adjacent external surfaces of the at least one membrane envelope (4) in the spiral bundle (23), ,wherein the first scroll face (20) corresponds to a first edge (7) of a membrane envelope (4) and the second scroll face (21) corresponds to a second edge (8) of said membrane envelope (4), said spiral wound filtration element being **characterized in that**
(iii) the first scroll face (20) includes at least two concentric, axially displaced regions (30, 31, 301), at least one of said concentric, axially displaced regions (30, 31, 301) of the first scroll face (20) being sealed with respect to the feed channels, and at least one of said concentric, axially displaced regions (30, 31, 301) of the first scroll face (20) being unsealed so as to permit a feed fluid to flow through such unsealed region of the first scroll face (20) and into the feed channels of the spiral bundle (23) or a concentrate to flow out of the feed channels of the spiral bundle (23) through such unsealed region;
the spiral wound filtration element (1) further comprising an opening on the second scroll face (21), on the exterior longitudinal surface (22) of the spiral bundle (23), or both, to permit a concentrate to flow out the feed channels of the spiral bundle (23) or a feed fluid to flow into the feed channels of the spiral bundle (23).

2. The spiral wound filtration element of claim 1 wherein the at least two concentric, axially displaced regions are axially displaced from each other by an average distance of 1 mm to 2 cm.

3. The spiral wound filtration element of claim 1 or 2 wherein the first scroll face has exactly two concentric, axially displaced regions.

4. The spiral wound filtration element of any preceding claim wherein the concentric, axially displaced regions include an inner region and an outer region, and the inner region is displaced axially outward relative to the outer region.

5. The spiral wound filtration element of any of claims 1-3 wherein the concentric, axially displaced regions include an inner region and an outer region, and the outer region is displaced axially outward relative to the inner region.

6. The spiral wound filtration element of any preceding claim wherein axial displacement between adjacent concentric, axially displaced regions the first scroll face produces a wall at the boundary between said concentric adjacent, axially displaced regions.

7. The spiral wound filtration element of any preceding claim wherein at least one of said concentric, axially displaced regions of the first scroll face is sealed with respect to the feed channels with an adhesive seal selected from the group consisting of a hot-melt adhesive, and a curable adhesive having at least one reactive monomer, preferably further comprising a backing layer adhered to the adhesive seal, such that the adhesive seal layer is sandwiched between the scroll face and backing layer.

8. A process for producing a spiral wound filtration element (1) comprising:
a) winding at least one membrane envelope (4) and feed spacer means (11) for producing feed channels around a permeate collection tube (2) to form a spiral bundle (23) having opposing first and second ends, an exterior longitudinal surface (22) between the first and second ends, feed channels located between adjacent external surfaces of the at least one membrane envelope (4), and one or more openings in the second end, the exterior longitudinal surface (22), or both, to permit a concentrate to flow out of the feed channels of the spiral bundle (23) or a feed fluid to flow into the feed channels of the spiral bundle (23), wherein
(i) the permeate collection tube (2) has multiple openings (3) along its length and a permeate outlet (24) on at least one end, and
(ii) each membrane envelope (4) comprises two sections of membrane sheet (5) and permeate channel spacer means (6) for providing a permeate channel between the two sections of membrane sheet (5) , each membrane envelope (4) being open on a proximal edge and sealed at or near each of a first edge (7), a second edge (8) opposite the first face edge (7), and a distal edge (9), wherein the first edge (7) is sealed with an adhesive strip (70), and wherein each membrane envelope (4) is affixed to the central permeate collection tube (2) such that the open proximal edge of each membrane envelope (4) is in fluid communication with one or more of the multiple openings (3) along the length of the permeate collection tube (2);
b) in one or more removal steps, removing at least a part of first end of the spiral bundle (23), whereby portions of each of membrane sheet (5), feed spacer means (11), permeate spacer means (6) and adhesive strip (70) are removed to form a first scroll face (20) while leaving a portion of the adhesive strip (70) intact along the entire first edge (7) of each membrane envelope (4); wherein said first scroll face (20) includes at least two concentric axially displaced scroll face regions (30, 31, 301); and
c) sealing at least one of but fewer than all of the concentric axially displaced scroll face regions (30, 31, 301) of the first scroll face (20) to produce one or more sealed scroll face regions, each sealed scroll face region having a seal that blocks flow into and out of the feed channels through said sealed scroll face region.

9. The process of claim 8 wherein the at least two concentric axially displaced scroll face regions produced in step b) are axially displaced from each other by an average distance of 1 mm to 2 cm.

10. The process of claim 8 or 9 wherein in step b) exactly two concentric, axially displaced regions are produced in the first scroll face.

11. The process of any of claims 8-10 wherein the concentric, axially displaced regions produced in step b) include an inner region and an outer region, and the inner region is displaced axially outward relative to the outer region, or wherein the concentric, axially displaced regions include an inner region and an outer region, and the outer region is displaced axially outward relative to the inner region.

12. The process of any of claims 8-11 wherein in step b) creates a wall having a height equal to axial displacement between the adjacent concentric, axially displaced regions of the first scroll face.

13. The process of any of claims 8-12 wherein step c) is performed after step b).

14. The process of any of claims 8-12, wherein step c) is performed by applying an adhesive seal to the entire scroll face prior to step b), and a portion of the adhesive seal is removed with the portion of the inlet end of the spiral bundle removed during step b).

15. The process of any of claims 8-12 wherein a first removal step is performed, an adhesive seal is then applied to all or a portion of the first scroll face, and a second removal step is performed whereby a portion of the adhesive seal is removed together with portions of each of membrane sheet, feed spacer means, permeate spacer means and adhesive strip.

## Patentansprüche

1. Spiralförmig gewickeltes Filtrationselement (1), umfassend:
(a) ein zentrales Permeat-Sammelrohr (2) mit multiplen Öffnungen (3) entlang seiner Länge und einem Permeat-Auslass (24) an einem oder beiden Enden;
(b) ein spiralförmiges Bündel (23), das mindestens eine Membranhülle (4) und mindestens ein Zufuhrabstandshaltermittel (11) zum Erzeugen von Zufuhrkanälen in dem spiralförmig gewickelten Filtrationselement umfasst, wobei die mindestens eine Membranhülle (4) und das mindestens eine Zufuhrabstandshaltermittel (11) um das zentrale Permeat-Sammelrohr (2) herum gewickelt sind,
wobei:
(i) jede Membranhülle (4) zwei Membranlagenabschnitte (5) und ein Permeatkanal-Abstandshaltermittel (6) zum Bereitstellen eines Permeatkanals zwischen den zwei Membranlagenabschnitten (5) umfasst, wobei jede Membranhülle (4) an jedem von einem ersten Rand (7), einem zweiten Rand (8), der dem ersten Rand (7) gegenüberliegt, und einem distalen Rand (9) abgedichtet und an einem proximalen Rand (10) offen ist, wobei jede Membranhülle (4) derart an dem zentralen Permeat-Sammelrohr (2) befestigt ist, dass der offene proximale Rand (10) jeder Membranhülle (4) mit einer oder mehreren der multiplen Öffnungen (3) entlang der Länge des Permeat-Sammelrohrs (2) in strömungstechnischer Kommunikation vorliegt,
(ii) das spiralförmige Bündel (23) an gegenüberliegenden Enden des spiralförmigen Bündels (23) eine erste (20) und eine zweite (21) sich gegenüberliegende Spiralflächen, eine äußere Längsoberfläche (22) zwischen der ersten (20) und der zweiten Spiralfläche (21) und Zufuhrkanäle zwischen benachbarten externen Oberflächen der mindestens einen Membranhülle (4) in dem spiralförmigen Bündel (23) aufweist, wobei die erste Spiralfläche (20) einem ersten Rand (7) einer Membranhülle (4) entspricht und die zweite Spiralfläche (21) einem zweiten Rand (8) der Membranhülle (4) entspricht, wobei das spiralförmig gewickelte Filtrationselement **dadurch gekennzeichnet ist, dass**
(iii) die erste Spiralfläche (20) mindestens zwei konzentrische, axial versetzte Bereiche (30, 31, 301) einschließt, wobei mindestens einer der konzentrischen, axial versetzten Bereiche (30, 31, 301) der ersten Spiralfläche (20) bezüglich der Zufuhrkanäle abgedichtet ist und mindestens einer der konzentrischen, axial versetzten Bereiche (30, 31, 301) der ersten Spiralfläche (20) nicht abgedichtet ist, um einem Zufuhrfluid zu gestatten, durch einen solchen nicht abgedichteten Bereich der ersten Spiralfläche (20) hindurch und in die Zufuhrkanäle des spiralförmigen Bündels (23) hineinzufließen, oder einem Konzentrat, durch einen solchen nicht abgedichteten Bereich aus den Zufuhrkanälen des spiralförmigen Bündels (23) hinauszufließen;
das spiralförmig gewickelte Filtrationselement (1) weiter umfassend eine Öffnung auf der zweiten Spiralfläche (21), auf der äußeren Längsoberfläche (22) des spiralförmigen Bündels (23), oder beiden, um einem Konzentrat zu gestatten, aus den Zufuhrkanälen des spiralförmigen Bündels (23) hinauszufließen oder einem Zufuhrfluid, in die Zufuhrkanäle des spiralförmigen Bündels (23) hineinzufließen.

2. Spiralförmig gewickeltes Filtrationselement nach Anspruch 1, wobei die mindestens zwei konzentrischen, axial versetzten Bereiche um einen mittleren Abstand von 1 mm bis 2 cm axial voneinander versetzt sind.

3. Spiralförmig gewickeltes Filtrationselement nach Anspruch 1 oder 2, wobei die erste Spiralfläche genau zwei konzentrische, axial versetzte Bereiche aufweist.

4. Spiralförmig gewickeltes Filtrationselement nach einem vorstehenden Anspruch, wobei die konzentrischen, axial versetzten Bereiche einen Innenbereich und einen Außenbereich einschließen und der Innenbereich in Bezug auf den Außenbereich axial nach außen versetzt ist.

5. Spiralförmig gewickeltes Filtrationselement nach einem der Ansprüche 1-3, wobei die konzentrischen, axial versetzten Bereiche einen Innenbereich und einen Außenbereich einschließen und der Außenbereich in Bezug auf den Innenbereich axial nach außen versetzt ist.

6. Spiralförmig gewickeltes Filtrationselement nach einem vorstehenden Anspruch, wobei axialer Versatz zwischen benachbarten konzentrischen, axial versetzten Bereichen der ersten Spiralfläche eine Wand an der Grenze zwischen den konzentrischen, benachbarten, axial versetzten Bereichen erzeugt.

7. Spiralförmig gewickeltes Filtrationselement nach einem vorstehenden Anspruch, wobei mindestens einer der konzentrischen, axial versetzten Bereiche der ersten Spiralfläche bezüglich der Zufuhrkanäle mit einer Klebstoffdichtung abgedichtet ist, die ausgewählt ist aus der Gruppe bestehend aus einem Schmelzklebstoff und einem aushärtbaren Klebstoff mit mindestens einem reaktiven Monomer, vorzugsweise weiter umfassend eine Trägerschicht, die derart an der Klebstoffdichtung angehaftet ist, dass die Klebstoffdichtungsschicht zwischen der Spiralfläche und der Trägerschicht beidseitig umgeben ist.

8. Prozess zum Erzeugen eines spiralförmig gewickelten Filtrationselements (1), umfassend:
a) Wickeln mindestens einer Membranhülle (4) und eines Zufuhrabstandhaltermittels (11) zum Erzeugen von Zufuhrkanälen um ein Permeat-Sammelrohr (2) herum, um ein spiralförmiges Bündel (23) mit einem ersten und einem zweiten Ende, die sich gegenüberliegen, eine äußere Längsoberfläche (22) zwischen dem ersten und dem zweiten Ende, Zufuhrkanäle, die sich zwischen benachbarten externen Oberflächen der mindestens einen Membranhülle (4) befinden, und eine oder mehrere Öffnungen in dem zweiten Ende, der äußeren Längsoberfläche (22) oder beiden zu bilden, um einem Konzentrat zu gestatten, aus den Zufuhrkanälen des spiralförmigen Bündels (23) hinauszufließen, oder einem Zufuhrfluid, in die Zufuhrkanäle des spiralförmigen Bündels (23) hineinzufließen, wobei
(i) das Permeat-Sammelrohr (2) entlang seiner Länge multiple Öffnungen (3) und an mindestens einem Ende einen Permeat-Auslass (24) aufweist, und
(ii) jede Membranhülle (4) zwei Membranlagenabschnitte (5) und ein Permeatkanal-Abstandshaltermittel (6) zum Bereitstellen eines Permeatkanals zwischen den zwei Membranlagenabschnitten (5) umfasst, wobei jede Membranhülle (4) an einem proximalen Rand offen und an oder in der Nähe von jedem eines ersten Rands (7), eines zweiten Rands (8), der dem ersten Rand (7) gegenüberliegt, und eines distalen Rands (9) abgedichtet ist, wobei der erste Rand (7) mit einem Klebstoffstreifen (70) abgedichtet ist, und wobei jede Membranhülle (4) an dem zentralen Permeat-Sammelrohr (2) derart befestigt ist, dass der offene proximale Rand jeder Membranhülle (4) entlang der Länge des Permeat-Sammelrohrs (2) mit einer oder mehreren der multiplen Öffnungen (3) in strömungstechnischer Kommunikation vorliegt;
b) in einem oder mehreren Entfernungsschritten, Entfernen mindestens eines Teils des ersten Endes des spiralförmigen Bündels (23), wodurch Anteile von jeder Membranlage (5), jedem Zufuhrabstandshaltermittel (11), des Permeatabstandshaltermittels (6) und des Klebstoffstreifens (70) entfernt werden, um eine erste Spiralfläche (20) zu bilden, während ein Anteil des Klebstoffstreifens (70) entlang des gesamten ersten Rands (7) jeder Membranhülle (4) intakt gelassen wird; wobei die erste Spiralfläche (20) mindestens zwei konzentrische, axial versetzte Spiralflächenbereiche (30, 31, 301) einschließt; und
c) Abdichten mindestens eines, aber weniger als aller konzentrischen, axial versetzten Spiralflächenbereiche (30, 31, 301) der ersten Spiralfläche (20), um einen oder mehrere abgedichtete Spiralflächenbereiche zu erzeugen, wobei jeder abgedichtete Spiralflächenbereich eine Abdichtung aufweist, die den Fluss durch den abgedichteten Spiralflächenbereich in die und aus den Zufuhrkanälen blockiert.

9. Prozess nach Anspruch 8, wobei die mindestens zwei konzentrischen, axial versetzten Spiralflächenbereiche, die in Schritt b) erzeugt wurden, axial um einen mittleren Abstand von 1 mm bis 2 cm voneinander versetzt werden.

10. Prozess nach Anspruch 8 oder 9, wobei in Schritt b) genau zwei konzentrische, axial versetzte Bereiche in der ersten Spiralfläche erzeugt werden.

11. Prozess nach einem der Ansprüche 8-10, wobei die in Schritt b) erzeugten konzentrischen, axial versetzten Bereiche einen Innenbereich und einen Außenbereich einschließen und der Innenbereich in Bezug auf den Außenbereich axial nach außen versetzt ist, oder wobei die konzentrischen, axial versetzten Bereiche einen Innenbereich und einen Außenbereich einschließen und der Außenbereich in Bezug auf den Innenbereich axial nach außen versetzt ist.

12. Prozess nach einem der Ansprüche 8-11, wobei in Schritt b) eine Wand mit einer Höhe gleich dem axialen Versatz zwischen den benachbarten konzentrischen, axial versetzten Bereichen der ersten Spiralfläche generiert.

13. Prozess nach einem der Ansprüche 8-12, wobei Schritt c) nach Schritt b) durchgeführt wird.

14. Prozess nach einem der Ansprüche 8-12, wobei Schritt c) durch Aufbringen einer Klebstoffdichtung auf die gesamte Spiralfläche vor Schritt b) durchgeführt wird und ein Anteil der Klebstoffdichtung mit dem Anteil des Einlassendes des spiralförmigen Bündels im Laufe von Schritt b) entfernt wird.

15. Prozess nach einem der Ansprüche 8-12, wobei ein erster Entfernungsschritt durchgeführt wird, dann eine Klebstoffdichtung auf die ganze oder einen Anteil der ersten Spiralfläche aufgebracht wird und ein zweiter Entfernungsschritt durchgeführt wird, wodurch ein Anteil der Klebstoffdichtung zusammen mit Anteilen von jedem von der Membranlage, dem Zufuhrabstandshaltermittel, Permeatabstandshaltermittel und des Klebstoffstreifens entfernt wird.

## Revendications

1. Élément de filtration enroulé en spirale (1) comprenant :
(a) un tube central de collecte de perméat (2) comportant de multiples ouvertures (3) sur toute sa longueur et une sortie de perméat (24) à une ou aux deux extrémités ;
(b) un faisceau spiralé (23) comprenant au moins une enveloppe de membrane (4) et au moins un moyen d'espacement d'alimentation (11) pour produire des canaux d'alimentation dans l'élément de filtration enroulé en spirale, l'au moins une enveloppe de membrane (4) et l'au moins un moyen d'espacement d'alimentation (11) étant enroulés autour du tube central de collecte du perméat (2),
dans lequel :
(i) chaque enveloppe de membrane (4) comprend deux sections de feuille de membrane (5) et un moyen d'espacement de canal de perméat (6) pour fournir un canal de perméat entre les deux sections de feuille de membrane (5), chaque enveloppe de membrane (4) étant scellée sur chacun d'un premier bord (7), d'un deuxième bord (8) opposé au premier bord (7), et d'un bord distal (9), et étant ouverte sur un bord proximal (10), chaque enveloppe de membrane (4) étant fixée au tube central de collecte du perméat (2) de sorte que le bord proximal ouvert (10) de chaque enveloppe de membrane (4) soit en communication fluidique avec une ou plusieurs des multiples ouvertures (3) le long du tube de collecte du perméat (2),
(ii) ledit faisceau spiralé (23) présente, à ses extrémités opposées, une première (20) et une seconde (21) faces d'enroulement du faisceau spiralé (23) opposées, une surface longitudinale extérieure (22) située entre la première (20) et la seconde (21) faces, et des canaux d'alimentation situés entre des surfaces externes adjacentes de l'au moins une enveloppe de membrane (4) du faisceau spiralé (23), dans lequel la première face d'enroulement (20) correspond à un premier bord (7) de l'enveloppe de membrane (4), et la seconde face d'enroulement (21) correspond à un second bord (8) de ladite enveloppe de membrane (4), ledit élément de filtration spiralé étant **caractérisé en ce que**
(iii) la première face en spirale (20) inclut au moins deux régions concentriques décalées axialement (30, 31, 301), au moins une de ces régions concentriques décalées axialement (30, 31, 301) de la première face en spirale (20) étant scellée par rapport aux canaux d'alimentation, et au moins une de ces régions concentriques décalées axialement (30, 31, 301) de la première face en spirale (20) étant non scellée afin de permettre à un fluide d'alimentation de s'écouler à travers cette région non scellée de la première face en spirale (20) et dans les canaux d'alimentation du faisceau spiralé (23) ou à un concentré de s'écouler hors des canaux d'alimentation du faisceau spiralé (23) à travers cette région non scellée ;
l'élément de filtration enroulé en spirale (1) comprenant en outre une ouverture sur la deuxième face en spirale (21), sur la surface longitudinale extérieure (22) du faisceau spiralé (23), ou les deux, pour permettre à un concentré de s'écouler des canaux d'alimentation du faisceau spiralé (23) ou à un fluide d'alimentation de s'écouler dans les canaux d'alimentation du faisceau spiralé (23).

2. Élément de filtration enroulé en spirale selon la revendication 1, dans lequel les au moins deux régions concentriques et décalées axialement sont décalées axialement l'une de l'autre d'une distance moyenne de 1 mm à 2 cm.

3. Élément de filtration enroulé en spirale selon la revendication 1 ou 2, dans lequel la première face en spirale comporte exactement deux régions concentriques décalées axialement.

4. Élément de filtration enroulé en spirale selon une quelconque revendication précédente, dans lequel les régions concentriques et décalées axialement incluent une région intérieure et une région extérieure, et la région intérieure est décalée axialement vers l'extérieur par rapport à la région extérieure.

5. Élément de filtration enroulé en spirale selon l'une quelconque des revendications 1-3, dans lequel les régions concentriques et décalées axialement incluent une région intérieure et une région extérieure, et la région extérieure est décalée axialement vers l'extérieur par rapport à la région intérieure.

6. Élément de filtration enroulé en spirale selon une quelconque revendication précédente dans lequel le déplacement axial entre des régions concentriques adjacentes, déplacées axialement de la première face en spirale produit une paroi à la limite entre lesdites régions concentriques adjacentes, déplacées axialement.

7. Élément de filtration enroulé en spirale selon une quelconque revendication précédente, dans lequel au moins une desdites régions concentriques et décalées axialement de la première face en spirale est scellée par rapport aux canaux d'alimentation avec un joint adhésif choisi parmi le groupe constitué d'un adhésif thermofusible et d'un adhésif durcissable présentant au moins un monomère réactif, comprenant en outre de préférence une couche de support adhérant au joint adhésif, de sorte que la couche de joint adhésif soit prise en sandwich entre la face en spirale et la couche de support.

8. Procédé de fabrication d'un élément de filtration enroulé en spirale (1) comprenant :
a) l'enroulement d'au moins une enveloppe de membrane (4) et de moyens d'espacement d'alimentation (11) pour créer des canaux d'alimentation autour d'un tube de collecte de perméat (2) afin de former un faisceau spiralé (23) présentant une première et une seconde extrémité opposées, une surface longitudinale extérieure (22) entre la première et la seconde extrémités, des canaux d'alimentation situés entre des surfaces externes adjacentes de l'au moins une enveloppe de membrane (4), et une ou plusieurs ouvertures dans la seconde extrémité, la surface longitudinale extérieure (22), ou les deux, permettant à un concentré de s'écouler des canaux d'alimentation du faisceau spiralé (23) ou à un fluide d'alimentation de s'écouler des canaux d'alimentation du faisceau spiralé (23), dans lequel
(i) le tube de collecte du perméat (2) comporte plusieurs ouvertures (3) sur toute sa longueur et une sortie de perméat (24) à au moins une extrémité, et
(ii) chaque enveloppe de membrane (4) comprend deux sections de feuille de membrane (5) et des moyens d'espacement du canal de perméat (6) pour fournir un canal de perméat entre les deux sections de feuille de membrane (5), chaque enveloppe de membrane (4) étant ouverte sur un bord proximal et scellée au niveau ou près de chacun d'un premier bord (7), d'un deuxième bord (8) opposé au premier bord de face (7) et d'un bord distal (9), dans lequel le premier bord (7) est scellé avec une bande adhésive (70), et dans lequel chaque enveloppe de membrane (4) est fixée au tube central de collecte de perméat (2) de sorte que le bord proximal ouvert de chaque enveloppe de membrane (4) soit en communication fluidique avec une ou plusieurs des multiples ouvertures (3) le long du tube de collecte de perméat (2) ;
b) en une ou plusieurs étapes de retrait, le retrait d'au moins un seau de la première extrémité du faisceau spiralé (23), selon lequel des portions de chacun de la feuille de membrane (5), du moyen d'espacement d'alimentation (11), du moyen d'espacement de perméat (6) et de la bande adhésive (70) sont retirés pour former une première face d'enroulement (20) tout en laissant une portion de la bande adhésive (70) intacte le long de tout le premier bord (7) de chaque enveloppe de membrane (4) ; dans lequel ladite première face d'enroulement (20) inclut au moins deux régions de face d'enroulement concentriques décalées axialement (30, 31, 301) ; et
c) le scellement d'au moins une des régions concentriques de la face en spirale décalées axialement (30, 31, 301) de la première face en spirale (20) mais moins de la totalité, pour produire une ou plusieurs régions de face en spirale scellées, chaque région de face en spirale scellée présentant un joint qui bloque le flux entrant et sortant des canaux d'alimentation à travers ladite région de face en spirale scellée.

9. Procédé selon la revendication 8, dans lequel les au moins deux régions de face en spirale concentriques décalées axialement produites à l'étape b) sont décalées axialement l'une de l'autre d'une distance moyenne de 1 mm à 2 cm.

10. Procédé selon la revendication 8 ou 9, dans lequel à l'étape b), exactement deux régions concentriques et décalées axialement sont produites dans la première face en spirale.

11. Procédé selon l'une quelconque des revendications 8-10, dans lequel les régions concentriques et décalées axialement produites à l'étape b) incluent une région intérieure et une région extérieure, et la région intérieure est décalée axialement vers l'extérieur par rapport à la région extérieure, ou dans lequel les régions concentriques et décalées axialement incluent une région intérieure et une région extérieure, et la région extérieure est décalée axialement vers l'extérieur par rapport à la région intérieure.

12. Procédé selon l'une quelconque des revendications 8 à 11, dans lequel l'étape b) crée un mur présentant une hauteur égale au déplacement axial entre les régions concentriques adjacentes, déplacées axialement, de la première face en spirale.

13. Procédé selon l'une quelconque des revendications 8 à 12 dans lequel l'étape c) est effectuée après l'étape b).

14. Procédé selon l'une quelconque des revendications 8 à 12, dans lequel l'étape c) est réalisée en appliquant un joint adhésif sur toute la surface en spirale avant l'étape b), et une partie du joint adhésif est retirée avec la partie de l'extrémité d'entrée du faisceau spiralé retirée pendant l'étape b).

15. Procédé selon l'une quelconque des revendications 8 à 12, dans lequel une première étape de dépose est effectuée, un joint adhésif est ensuite appliqué sur tout ou partie de la première face en spirale, et une deuxième étape de dépose est effectuée selon laquelle une partie du joint adhésif est retirée avec des parties de chacun parmi une feuille de membrane, un moyen d'espacement d'alimentation, un moyen d'espacement de perméat et une bande adhésive.
